# EUROPÄISCHE PATENTSCHRIFT

(11) **EP 3 571 017 B1**
(45) Veröffentlichungstag und Bekanntmachung des Hinweises auf die Patenterteilung: **29.12.2021**
(21) Anmeldenummer: 18711090.3
(22) Anmeldetag: 13.03.2018
(51) Int. Cl.: B25B 23/14

(54) **VERFAHREN UND VORRICHTUNG ZUM ANZIEHEN VON VERSCHRAUBUNGEN**
METHOD AND DEVICE FOR TIGHTENING SCREW JOINTS
PROCÉDÉ ET DISPOSITIF DE SERRAGE D'ASSEMBLAGE À VIS

(30) Priorität: 13.03.2017 DE 102017002440
(43) Veröffentlichungstag der Anmeldung: 27.11.2019
(73) Patentinhaber: Liebherr-Components Biberach GmbH, 88400 Biberach/Riß (DE)
(72) Erfinder: PARLOW, Jan, 88524 Uttenweiler (DE); MUPENDE, Ilaka, 89231 Neu-Ulm (DE); BARTON, Peter, 75015 Bretten (DE)
(74) Vertreter: Thoma, Michael
(86) Internationale Anmeldenummer: PCT/EP2018/056152
(87) Internationale Veröffentlichungsnummer: WO 2018/167008

(56) Entgegenhaltungen:
- EP-A1- 0 559 937
- EP-A2- 0 264 034
- DE-A1- 3 143 350
- DE-A1-102005 019 258
- DE-A1-102007 048 187

## Beschreibung

Die vorliegende Erfindung betrifft ein Verfahren sowie eine Vorrichtung zum Anziehen einer Verschraubung mit einer motorbetriebenen Schraubereinheit, wobei während des Anziehens der Drehwinkel und das Drehmoment bestimmt werden, um bei Erreichen einer gewünschten Anzugsspannung den Anziehvorgang stoppen zu können.

Solche drehwinkel- und drehmomentgesteuerten Schraubereinheiten nach dem Oberbegriff des Anspruchs 1 bzw. des Anspruchs 4 sind aus der Schrift DE 31 43 350 A1 bekannt. Weitere drehwinkel- bzw. drehmomentgesteuerten Schraubereinheiten sind aus den Schriften DE 10 2005 019 258 A1, EP 0 264 034 A2 und EP 0 559 937 A1 bekannt.

Mittels Verschraubungen werden üblicherweise zwei Bauteile miteinander verbunden, wobei eine solche Verschraubung einen durch die mehreren Bauteile hindurchgehenden Schraubbolzen umfassen kann, auf den eine Schraubenmutter aufgeschraubt wird. Alternativ können solche Verschraubungen auch durch Schrauben realisiert werden, die in ein Gewinde eingeschraubt werden, das in einem der Bauteile vorgesehen ist, sei es in einem Sackloch oder in einem Durchgangsloch. Um die beiden zu verbindenden Bauteile mit der notwendigen Vorspannung gegeneinander zu verbinden und auch ein Lösen der Schraubverbindung sicher zu vermeiden, andererseits aber ein überfestes Anziehen mit der Gefahr von Beschädigungen der Schraubgewinde zu vermeiden, sollen die Verschraubungen möglichst exakt so stark angezogen werden, dass die gewünschte Vorspannkraft bzw. ein erlaubter Korridor hierfür weder unterschritten noch überschritten wird.

Im Stand der Technik wurde daher bereits vorgeschlagen, das Anziehen von Schraubverbindungen drehmomentgesteuert oder drehwinkelgesteuert auszuführen. Hierbei überwacht eine geeignete Sensorik das von der motorgetriebenen Schraubereinheit aufgebrachte Drehmoment, sodass der Anziehvorgang bei Erreichen eines vorbestimmten Drehmoments abgebrochen werden kann. Alternativ überwacht ein Drehgeber den Drehwinkel beim Anziehen, um nach einer bestimmten Anzahl von Anzugsumdrehungen zu stoppen. Beispielsweise schlägt die Schrift EP 2 067 576 A2 eine Schraubereinheit vor, bei der zunächst das Drehmoment überwacht wird, um den Referenzwert bzw. die Ausgangsstellung für die dann weiter erfolgende Überwachung des Drehwinkels zu bestimmen. Wird ein vorbestimmtes, anfängliches Anzugsmoment erreicht, wird die Drehwinkelmessung initialisiert bzw. sozusagen auf Null gestellt, um von dort aus dann einen vorbestimmten weiteren Drehwinkel zu verschrauben und dann abzuschalten.

Derartige drehmoment- bzw. drehwinkelgesteuerte Anziehverfahren benötigen jedoch die passende Vorgabe eines Grenzwerts für das Drehmoment bzw. eines Grenzwerts für den Drehwinkel, die naturgemäß mit verschiedenen Verschraubungsgeometrien und -materialien variieren. Um die Einstellung der Grenzwerte für das Drehmoment bzw. den Drehwinkel zu vereinfachen, wurde bereits vorgeschlagen, die Steuerung des motorgetriebenen Schraubers zu parametrieren, sodass nicht mehr die Drehmoment- bzw. Drehwinkelwerte selbst vorgegeben werden müssen, sondern Kenngrößen der vorzunehmenden Verschraubung wie bspw. Verschraubungsgeometrie, Bolzenstärke, Reibpaarungskoeffizient oder Materialpaarung eingegeben werden können. Anhand eines Berechnungsmodells werden dann anhand der jeweiligen Parameter die beiden zentralen Prozesskenngrößen Drehwinkel und Drehmoment bestimmt, welche dann als Grenzwerte von der Steuerung des motorgetriebenen Schraubers beim Anziehen einer Verschraubung berücksichtigt werden.

Solche parametrisierbaren Berechnungsmodelle sind jedoch nicht ganz einfach zu erstellen und immer noch fehleranfällig. Zum einen sind üblicherweise diverse Versuche an realen Bauteilen notwendig, um das resultierende Verschraubungsergebnis sicherzustellen bzw. die Parameter bzw. Modellalgorithmen soweit anzupassen, dass das tatsächlich erzielte Verschraubungsergebnis dem gewünschten Verschraubungsergebnis entspricht. Zum anderen können durch Falscheingaben von Parametern, die für die vorzunehmende Verschraubung nicht zutreffen, Fehler im Verschraubungsergebnis eintreten.

Der vorliegenden Erfindung liegt die Aufgabe zugrunde, ein verbessertes Verfahren und eine verbesserte Vorrichtung zum Anziehen von Verschraubungen zu schaffen, die Nachteile des Standes der Technik vermeiden und Letzteren in vorteilhafterweise weiterbilden. Insbesondere soll eine einfache, fehlerunanfällige Bedienbarkeit ermöglicht und gleichzeitig ein möglichst exaktes Vorspannen der Verschraubung in der gewünschten Höhe für verschiedene Verschraubungstypen erreicht werden.

Erfindungsgemäß wird die genannte Aufgabe durch ein Verfahren gemäß Anspruch 1 sowie eine Vorrichtung gemäß Anspruch 4 gelöst. Bevorzugte Ausgestaltungen der Erfindung sind Gegenstand der abhängigen Ansprüche.

Es wird also vorgeschlagen, die beim Anziehen einer jeweiligen Verschraubung auftretenden Prozessparameter Drehmoment und Drehwinkel prozesssynchron auszuwerten und hieraus Rückschlüsse auf Änderungen in den physikalischen Eigenschaften der Verschraubung zu ziehen und hieraus das Abschaltkriterium so zu bestimmen, dass die Verschraubung die gewünschte Vorspannung erreicht. Das Abschalten wird anhand realer, sich bei der jeweiligen Verschraubung zeigenden Prozessparameter sozusagen online bzw. on the job gesteuert. Erfindungsgemäß ist vorgesehen, dass von einer Bestimmungseinrichtung in einem ersten Anzugsbereich ein Anstieg des Drehmoments über dem Drehwinkel bestimmt und in einem zweiten, folgenden Anzugsbereich eine Änderungsgeschwindigkeit des Anstiegs des Drehmoments über dem Drehwinkel bestimmt wird, wobei von einer Steuereinrichtung bei Erreichen oder Überschreiten einer maximal zulässigen Änderungsgeschwindigkeit des Anstiegs des Drehmoments, die anhand des im ersten Anzugbereich aufgetretenen Anstiegs bestimmt wird, die Schraubereinheit stillgesetzt wird.

Die erfindungsgemäße Lehre geht von der Überlegung aus, dass die beim Anziehen auftretende Drehmoment-Drehwinkel-Kurve sich von Verschraubung zu Verschraubung unterscheiden kann, jedoch jeweils einem bestimmten Muster folgt. Insbesondere wird die Drehmoment-Drehwinkel-Kurve in einem anfänglichen, elastischen Bereich eine bestimmte Steigung bzw. einen bestimmten Anstieg zeigen und keine bzw. nur schwache Änderungen in der Steigung aufweisen, während in einem Bereich stärkeren Anzugs, in dem sich der Schraubbolzen seiner Streckgrenze nähert bzw. diese erreicht oder gar überschreitet, die Steigung der Drehmoment-Drehwinkel-Kurve deutlich stärkere Änderungen zeigt. Wird nun die sich jeweils zeigende Steigung der Drehmoment-Drehwinkel-Kurve im elastischen Bereich erfasst bzw. bestimmt, kann der weitere Kurvenverlauf verschraubungsspezifisch vorhergesagt bzw. ein Abschaltkriterium verschraubungsspezifisch abgeleitet werden, welches dann den Anziehvorgang exakt dann abbrechen kann, wenn die Verschraubung die gewünschte Vorspannung hat. Das Abschaltkriterium wird automatisch an die individuellen Eigenschaften der Verschraubung angepasst, indem die sich beim Anziehen zeigenden Prozessparameter Drehmoment und Drehwinkel prozesssynchron ausgewertet werden, um anhand des sich zeigenden Drehmomentanstiegs über dem Drehwinkel und dessen Änderungsrate das Abschaltkriterium zu bestimmen.

In Weiterbildung der Erfindung kann der vorgenannte erste Anzugsbereich, in dem der für die verschraubungsspezifische Drehmomentanstieg über dem Drehwinkel bestimmt wird, so ausgewählt werden, dass die Verschraubung eine elastische Verformung bzw. Dehnung zeigt, was beispielsweise anhand des Drehmomentbetrags und/oder des Drehmomentanstiegs über dem Drehwinkel festgelegt werden kann. Beispielsweise kann von einem anfänglichen Leergehen ausgehend ein erster stärkerer Anstieg als elastischer Bereich gewertet werden, in dem der verschraubungsspezifische Drehmomentanstieg dann bestimmt wird. Der zweite Anzugsbereich, in dem dann die Änderungsgeschwindigkeit des Anstiegs des Drehmoments über dem Drehwinkel auf Erreichen oder Überschreiten eines Maximalwerts überwacht wird, kann unmittelbar an den ersten Anstiegsbereich anschließen und/oder sich mit diesem auch überlappen. Beispielsweise kann der erste Anzugsbereich, in dem der Drehmomentanstieg bestimmt wird, sozusagen nachgezogen und immer länger beobachtet werden, während gleichzeitig bereits die Änderung des Drehmomentanstiegs überwacht wird.

Insbesondere kann die maximal zulässige Änderung für den Drehmomentanstieg über dem Drehwinkel derart festgelegt werden, dass die Verschraubung ihre Streckgrenze erreicht bzw. die Schraubverbindung auf ihre Streckgrenze vorgespannt ist. Bei Erreichen der Streckgrenze zeigt der Drehmomentanstieg über dem Drehwinkel, d. h. die Steigung der Drehmoment-Drehwinkel-Kurve, eine charakteristische Änderung, sodass durch Festlegen einer maximal zulässigen Änderung des Drehmomentanstiegs anhand des sich jeweils im anfänglichen elastischen Bereich zeigenden Anstiegs das Erreichen der Streckgrenze präzise ermittelt werden kann. Wird die bestimmte maximale, zulässige Änderung des Drehmomentanstiegs erreicht, kann der motorbetriebene Schrauber stillgesetzt werden, wobei dann die Schraubverbindung bis auf die Streckgrenze vorgespannt ist.

Die Bestimmung des Grenzkriteriums für den Steigungsgradienten der Drehmoment-Drehwinkel-Kurve kann jedoch nicht nur anhand der beim jeweiligen Anziehen auftretenden, prozesssynchron ausgewerteten Drehmoment- und Drehwinkelwerte bestimmt werden, sondern kann auch unter Berücksichtigung der Drehmoment-Schraubwinkel-Kurven vorherige Anziehprozesse und Verschraubungen festgelegt werden. Insbesondere können im einem Speicher und/oder einer Datenbank die Drehmoment-Drehwinkel-Verläufe, die sich beim Anziehen von verschiedenen Verschraubungen ergeben, und/oder daraus abgeleitete Grenzkriterien für den Steigungsgradienten zum Abschalten des Anziehprozesses gespeichert werden, sodass das Grenzkriterium für das Abschalten eines aktuelle auszuführenden Anziehvorgangs unter Berücksichtigung der gespeicherten Daten erfolgen kann. Beispielsweise kann zumindest anfänglich bei einem auszuführenden Anziehvorgang als Grenzkriterium ein gemittelter oder der letzte Grenzwert für die zulässige Änderung des Drehmomentanstiegs zugrunde gelegt werden, wobei dann eine Korrektur oder Anpassung erfolgen kann, wenn sich beim Erfassen des Anstiegs des Drehmoments über dem Drehwinkel beim aktuellen Anziehvorgang eine größere Abweichung von dem Datensatz zeigt, der dem anfänglich zugrunde gelegten Grenzkriterium zugrunde liegt.

In vorteilhafter Weiterbildung der Erfindung kann die Schraubereinheit auch in einem Betriebsmodus betrieben werden, in dem die Verschraubung nicht bis zum Erreichen der Streckgrenze angezogen wird, sondern der Anziehvorgang vorher abgebrochen wird. Beispielsweise kann die Schraubereinheit in einem oder mehreren Versuchsdurchgängen betrieben werden, in denen die sich ergebenden Drehmoment-Drehwinkel-Verläufe ermittelt und aufgezeichnet werden und mit dem Erreichen der Streckgrenze abgeglichen werden, um dann das Abschaltkriterium so festzulegen, dass der Anziehvorgang vor Erreichen der Streckgrenze abgebrochen wird. Beispielsweise kann eine Auswerteeinrichtung die im Probedurchlauf erhaltene Drehmoment-Drehwinkel-Kurve daraufhin untersuchen, wo die Streckgrenze erreicht wird, um dann als Abschaltkriterium einen Drehmomentwert und/oder Drehwinkelwert und/oder einen bestimmten Steigungsgradienten der Drehmoment-Drehwinkel-Kurve und/oder einen bestimmten Änderungswert für den Drehmomentanstieg über den Drehwinkel als Abschaltkriterium zu bestimmen, bei dessen Erreichen dann im nächsten bzw. den nächsten Seriendurchgängen abgeschaltet wird.

Die Bestimmungseinrichtung, die die Prozessparameter Drehmoment und Drehwinkel und deren Verlauf auswertet, kann integraler Bestandteil der Schraubereinheit und/oder deren Steuereinrichtung sein. Alternativ oder zusätzlich kann auch eine geräteexterne Bestimmungseinrichtung und/oder Auswerteeinheit vorgesehen sein, bspw. in Form eines anschließbaren PCs oder Tablets, der die Drehmoment- und Drehwinkelwerte auswerten kann.

Die genannten Prozessparameter Drehmoment und Drehwinkel können durch geeignete Drehmoment- und Drehwinkelsensoren unmittelbar an der Schraubereinheit erfasst werden. Alternativ oder zusätzlich können die genannten Prozessparameter jedoch auch indirekt bestimmt werden, bspw. durch Erfassung der Leistungsaufnahme des Schrauberantriebs. Beispielsweise kann bei einem elektrischen Schraubermotor die Motorspannung und/oder der Motorstrom gemessen und als Maß für das Drehmoment genommen werden. Wird ein hydraulischer Schrauberantrieb verwendet, kann der Druck und/oder der Volumenstrom des hydraulischen Antriebs gemessen werden, wobei bspw. die Bestimmung der Drehmoment-Drehwinkel-Kurve anhand des Druck-Volumenstrom-Gradienten erfolgen kann.

Die Erfindung wird nachfolgend anhand eines bevorzugten Ausführungsbeispiels und einer zugehörigen Zeichnung näher erläutert. In der Zeichnung zeigt:

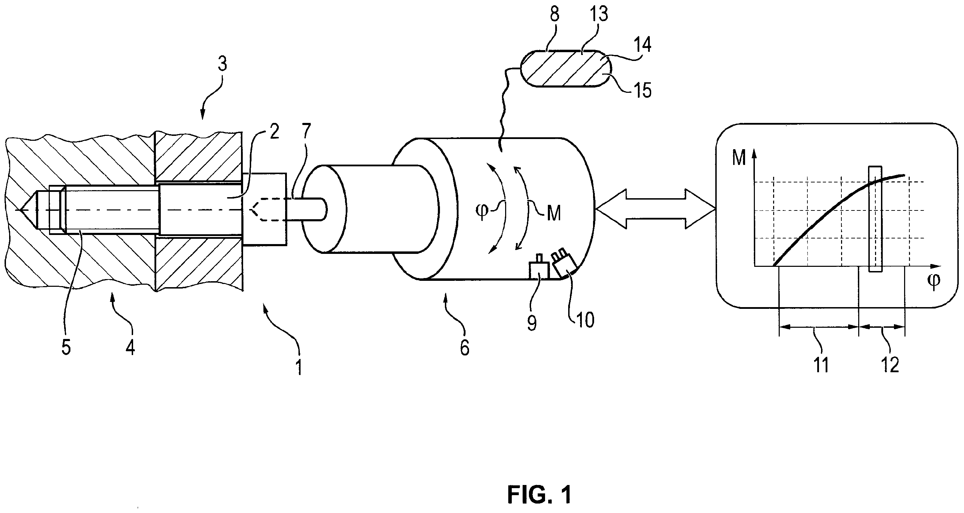

- Fig. 1:: Eine schematische, teilweise geschnittene Darstellung einer Verschraubung und einer daran angesetzten Schraubereinheit zum Anziehen der Verschraubung sowie eines sich beim Anziehen ergebenden Drehmoment-Drehwinkel-Diagramms.

Wie Fig. 1 zeigt, kann die Verschraubung 1 eine Schraube 2 umfassen, mittels derer ein erstes Bauteil 3 an einem zweiten Bauteil 4 befestigt wird, wobei die Schraube 2 bspw. in ein Gewinde 5 in dem zweiten Bauteil 4 eingeschraubt werden kann, sodass der Kopf der Schraube 2 das erste Bauteil 3 auf das zweite Bauteil 4 spannt.

Die motorgetriebene Schraubereinheit 6 kann ein handgeführtes Gerät oder auch ein bspw. robotergeführtes Gerät sein und einen Schrauberantrieb umfassen, der einen Elektromotor und/oder einen Druckmittelmotor wie bspw. Hydraulikmotor oder Pneumatikmotor umfassen kann.

Der genannte Schrauberantrieb treibt ein Schrauberwerkzeug 7 an, mittels dessen die Verschraubung 1 rotatorisch angezogen werden kann.

Eine Bestimmungseinrichtung 8 zum Bestimmen des beim Anziehen auftretenden Drehmoments M und des dabei eintretenden Drehwinkels ϕ kann bspw. einen Drehmomentsensor 9 und einen Drehwinkelsensor 10 umfassen, wobei die genannten Prozessgrößen jedoch auch mittelbar erfasst werden können, wie zuvor erläutert.

Beim Anziehend der Verschraubung 1 ergibt sich dabei der in dem rechtsseitigen Diagramm der Fig. 1 dargestellte Drehmomentverlauf des Drehmoments M über dem Drehwinkel ϕ. Wie Fig. 1 zeigt, startet der Anziehvorgang sozusagen drehmomentlos, d.h. die Schraube 2 lässt sich anfangs ohne nennenswerten Widerstand drehen, bis der Kopf der Schraube das Bauteil 3 erreicht und dieses am zweiten Bauteil 4 anliegt.

Nach diesem anfänglich mehr oder minder widerstandslosen Anschrauben ergibt sich ein erster, elastischer Anziehbereich 11, in dem das Drehmoment M über dem Drehwinkel ϕ mit einer zumindest näherungsweise konstanten Steigerungsrate ansteigt. In diesem elastischen Anziehbereich 11 zeigt die Drehmoment-Drehwinkel-Kurve einen etwa konstanten bzw. nur sich gering ändernden Anstieg, vgl. Fig. 1.

In einem zweiten, dem ersten folgenden Anziehbereich 12, in dem die Verschraubung 11 ihre Streckgrenze erreicht bzw. sich dieser nähert, zeigt die genannte Drehmoment-Drehwinkel-Kurve eine zunehmende Änderungsrate. Wie Fig. 1 zeigt, wird die Kurve flacher und steigt nicht mehr so steil an, d.h. der Anstieg des Drehmoments über dem Drehwinkel ändert sich stärker.

Die genannte Bestimmungseinrichtung 8 umfasst eine geräteinterne oder geräteexterne, anschließbare Auswerteeinheit 13, die während des Anziehvorgangs die erfassten Drehmoment- und Drehwinkelwerte auswertet und den Anstieg der Fig. 1 gezeigten Drehmoment-Drehwinkel-Kurve bestimmt.

Anhand des sich im ersten, elastischen Anziehbereich 11 einstellenden Drehmomentanstiegs über dem Drehwinkel kann die Auswerteeinheit 13 eine maximal zulässige Änderung für den Drehmomentanstieg über dem Drehwinkel festlegen, bspw. dahingehend, dass als Grenzkriterium festgelegt wird, dass der Schrauberantrieb stillgesetzt wird, wenn der Drehmomentanstieg über dem Drehwinkel 10 nur noch 75% des Drehmomentanstiegs über dem Drehwinkel im genannten ersten elastischen Anziehbereich 11 beträgt.

Zusätzlich zu der absoluten Anderung des Anstiegs wird auch die Änderungsgeschwindigkeit als Abschaltkriterium herangezogen. Insbesondere kann aus dem eher trägen Änderungsverlauf in dem ersten elastischen Anziehbereich 11 eine maximal zulässige Änderungsgeschwindigkeit, also Drehmomentänderung pro Drehwinkeleinheit, festgelegt werden, bei deren Erreichen oder Überschreiten der Anziehvorgang abgebrochen wird.

Eine Steuereinrichtung 14 kann den Schrauberantrieb der Schraubereinheit 6 stillsetzen, sobald die genannte maximal zulässige Änderungsgeschwindigkeit des Drehmomentanstiegs über dem Drehwinkel erreicht wird.

## Patentansprüche

1. Verfahren zum Anziehen einer Verschraubung (1) mittels einer motorbetriebenen Schraubereinheit (6), bei dem während des Anziehens der Drehwinkel (ϕ) und das Drehmoment (M) bestimmt werden, wobei von einer Bestimmungseinrichtung (8) in einem ersten Anziehbereich (11) ein Anstieg des Drehmoments über dem Drehwinkel und/oder eine Änderung des Drehmomentanstiegs über dem Drehwinkel bestimmt wird, **dadurch gekennzeichnet, dass** von der Bestimmungseinrichtung (8) in einem zweiten, folgenden Anziehbereich (12) eine Änderungsgeschwindigkeit des Anstiegs des Drehmoments über dem Drehwinkel bestimmt wird, wobei von einer Steuereinrichtung (14) bei Erreichen oder Überschreiten einer maximal zulässigen Änderungsgeschwindigkeit des Anstiegs des Drehmoments, die anhand des im ersten Anziehbereich (11) bestimmten Anstiegs und der im ersten Anziehbereich (11) bestimmten Anstiegsänderung bestimmt wird, die Schraubereinheit stillgesetzt wird.

2. Verfahren nach dem vorhergehenden Anspruch, wobei der erste Anziehbereich (11) anhand des Drehmomentbetrags und/oder des Drehmomentanstiegs und/oder der Drehmomentanstiegsänderung über dem Drehwinkel ϕ als elastischer Anziehbereich, in dem die Verschraubung (1) elastisch verformt wird, festgelegt wird und/oder die maximal zulässige Änderung des Drehmomentanstiegs und/oder Änderungsgeschwindigkeit des Drehmomentanstiegs derart festgelegt wird, dass die Verschraubung (1) auf die Streckgrenze vorgespannt wird.

3. Verfahren nach einem der beiden vorhergehenden Ansprüche, wobei für die Bestimmung der maximal zulässigen Änderung und/oder Änderungsgeschwindigkeit des Drehmomentanstiegs in vorherigen Verschraubungsvorgängen bestimmte Drehmomentanstiege und/oder Drehmomentanstiegsänderungen und/oder daraus bestimmte maximal zulässige Anstiegsänderungen und/oder Änderungsgeschwindigkeiten berücksichtigt werden.

4. Vorrichtung zum Anziehen einer Verschraubung (1), mit einer motorbetriebenen Schraubereinheit (6), Bestimmungsmitteln (9, 10) zum Bestimmen des Drehmoments (M) und des Drehwinkels (ϕ) während des Anziehens der Verschraubung (1), einer Bestimmungseinrichtung (8) zum Bestimmen eines Anstiegs und einer Anstiegsänderung des Drehmoments (M) über dem Drehwinkel (ϕ) in einem ersten Anziehbereich (11), **dadurch gekennzeichnet, dass** die Bestimmungseinrichtung (8) dazu ausgebildet ist, eine Änderungsgeschwindigkeit des Drehmomentanstiegs über dem Drehwinkel zu bestimmen, wobei eine Auswerteeinheit (13) zum Festlegen einer maximal zulässigen Änderungsgeschwindigkeit des Drehmomentanstiegs anhand des im ersten Anziehbereich (11) bestimmten Drehmomentanstiegs und der im ersten Anstiegsbereich (11) bestimmten Änderungsgeschwindigkeit des Drehmomentanstiegs, sowie eine Steuereinrichtung (14) zum Stillsetzen der Schraubereinheit (6) bei Erreichen und/oder Überschreiten der maximal zulässigen Änderungsgeschwindigkeit des Drehmomentanstiegs vorgesehen ist.

5. Vorrichtung nach dem vorhergehenden Anspruch, wobei die Bestimmungsmittel zum Bestimmen des Drehmoments (M) und des Drehwinkels (ϕ) einen Drehmomentsensor (9) und einen Drehwinkelsensor (10) und/oder eine Leistungsaufnahme-Messeinrichtung zum Messen der elektrischen Leistungsaufnahme eines Schrauberantriebs und/oder einen Drucksensor sowie einen Volumenstrommesser zum Messen des Drucks und des Volumenstroms eines hydraulischen Schrauberantriebs aufweisen.

6. Vorrichtung nach einem der beiden vorhergehenden Ansprüche, wobei die Bestimmungseinrichtung (8) und/oder die Auswerteeinheit (13) und/oder die Steuereinrichtung (14) in die Schraubereinheit (6) integriert sind und/oder Komponenten einer elektronischen Steuereinrichtung, die in der Schraubereinheit (6) vorgesehen ist, bilden.

7. Vorrichtung nach Anspruch 4 oder 5, wobei die Bestimmungseinrichtung (8) und/oder die Auswerteeinheit (13) Teil einer externen elektronischen Rechnereinrichtung sind, an die die Schraubereinheit (6) anschließbar ist.

8. Vorrichtung nach einem der Ansprüche 4 bis 6, wobei die Bestimmungseinrichtung (8) und/oder die Auswerteeinheit (13) an eine Speichereinrichtung (15) anschließbar sind, in der Drehmoment-Drehwinkel-Verläufe aus vorherigen Anziehvorgängen und/oder daraus abgeleitete maximal zulässige Anstiegsänderungen und/oder Änderungsgeschwindigkeiten des Drehmomentanstiegs abgespeichert sind, wobei die Auswerteeinheit (13) dazu konfiguriert ist, die maximal zulässige Änderung und/oder Änderungsgeschwindigkeit des Drehmomentanstiegs anhand der im Speicher (15) gespeicherten Drehmoment-Drehwinkel-Verläufe und/oder gespeicherten maximal zulässigen Anstiegsänderung und/oder Änderungsgeschwindigkeiten zu bestimmen.

## Claims

1. A method of tightening a screw connection (1) by means of a motor-driven screwdriver unit (6) in which the angle of rotation (ϕ) and the torque (M) are determined during the tightening, wherein an increase of the torque is determined via the angle of rotation and/or a change of the torque increase is determined via the angle of rotation by a determination device (18) in a first tightening region (11), **characterized in that** a change speed of the increase of the torque is determined via the angle of rotation in a second, following tightening region (12), with the screwdriver unit being stopped by a control device (14) on reaching or exceeding a maximum permitted change speed of the increase of the torque that is determined with reference to the increase determined in the first tightening region (11) and to the increase change determined in the first tightening region (11).

2. A method in accordance with the preceding claim, wherein the first tightening region (11) is fixed via the angle of rotation (ϕ) with reference to the torque amount and/or to the torque increase and/or to the torque increase change as an elastic tightening region in which the screw connection (1) is elastically deformed; and/or wherein the maximum permitted change of the torque increase and/or change speed of the torque increase is fixed such that the screw connection (1) is preloaded to the yield point.

3. A method in accordance with one of the two preceding claims, wherein torque increases and/or torque increase changes determined in previous screw connection processes and/or maximum permitted increase changes and/or change speeds determined therefrom are taken into account for the determination of the maximum permitted change and/or change speed of the torque increase.

4. An apparatus for tightening a screw connection (1) having a motor-driven screwdriver unit (6) and having determination means (9, 10) for determining the torque (M) and the angle of rotation (ϕ) during the tightening of the screw connection (1), and having a determination device (8) for determining an increase and/or an increase change of the torque (M) via the angle of rotation (ϕ) in a first tightening region (11), **characterized in that** the determination device (8) is configured to determine a change speed of the torque increase via the angle of rotation, with an evaluation unit (13) being provided for fixing a maximum permitted change speed of the torque increase with reference to the torque increase determined in the first tightening region (11) and the change speed of the torque increase determined in the first tightening region (11), and with a control device (14) being provided for stopping the screwdriver unit (6) on reaching and/or exceeding the maximum permitted change speed of the torque increase.

5. An apparatus in accordance with the preceding claim, wherein the determination means for determining the torque (M) and the angle of rotation (ϕ) have a torque sensor (9) and an angle of rotation sensor (10) and/or a power consumption measurement device for measuring the electrical power consumption of a screwdriver drive and/or a pressure sensor and a volume flow meter for measuring the pressure and the volume flow of a hydraulic screwdriver drive.

6. An apparatus in accordance with one of the two preceding claims, wherein the determination device (8) and/or the evaluation unit (13) and/or the control device (14) is/are integrated in the screwdriver unit (6) and/or form components of an electronic control device that is provided in the screwdriver unit (6).

7. An apparatus in accordance with claim 4 or claim 5, wherein the determination device (8) and/or the evaluation unit (13) is/are part of an external electronic processing device to which the screwdriver unit (6) is connectable.

8. An apparatus in accordance with one of the claims 4 to 6, wherein the determination device (8) and/or the evaluation unit (13) is/are connectable to a memory device (15) in which torque/angle of rotation developments from previous tightening processes and/or maximum permitted increase changes and/or change speeds of the torque increase derived therefrom are stored; and wherein the evaluation unit (13) is configured to determine the maximum permitted change and/or change speed of the torque increase with reference to the torque/angle of rotation developments stored in the memory (15) and/or the stored maximum permitted change increase and/or change speeds.

## Revendications

1. Procédé de serrage d'un assemblage à vis (1) au moyen d'un ensemble visseuse (6) motorisé, dans lequel l'angle de rotation (ϕ) et le couple (M) sont déterminés pendant le serrage, une augmentation du couple en fonction de l'angle de rotation et/ou une modification de l'augmentation du couple en fonction de l'angle de rotation étant déterminées par un dispositif de détermination (8) dans une première plage de serrage (11), **caractérisé en ce qu'**une vitesse de modification de l'augmentation du couple en fonction de l'angle de rotation est déterminée par le dispositif de détermination (8) dans une seconde plage de serrage (12) suivante, l'ensemble visseuse étant arrêté par un dispositif de commande (14) lorsqu'une vitesse de modification maximale autorisée de l'augmentation du couple, déterminée au moyen de l'augmentation déterminée dans la première plage de serrage (11) et de la modification de l'augmentation déterminée dans la première plage de serrage (11), est atteinte ou dépassée.

2. Procédé selon la revendication précédente, dans lequel la première plage de serrage (11) est définie au moyen de la grandeur du couple et/ou de l'augmentation du couple et/ou de la modification de l'augmentation du couple en fonction de l'angle de rotation ϕ comme plage de serrage élastique, dans laquelle l'assemblage à vis (1) est déformé de manière élastique, et/ou la modification de l'augmentation du couple et/ou vitesse de modification de l'augmentation du couple maximales autorisées sont définies de telle manière que l'assemblage à vis (1) est précontraint jusqu'à la limite apparente d'élasticité.

3. Procédé selon l'une des deux revendications précédentes, dans lequel, pour la détermination de la modification et/ou de la vitesse de modification maximales autorisées de l'augmentation du couple, des augmentations du couple et/ou des modifications d'augmentation du couple déterminées dans des processus précédents de vissage et/ou des modifications d'augmentation et/ou des vitesses de modification maximales autorisées déterminées à partir de celles-ci sont prises en compte.

4. Dispositif de serrage d'un assemblage à vis (1), comprenant un ensemble visseuse (6) motorisé, des moyens de détermination (9, 10) pour déterminer le couple (M) et l'angle de rotation (ϕ) pendant le serrage de l'assemblage à vis (1), un dispositif de détermination (8) pour déterminer une augmentation et une modification d'augmentation du couple (M) en fonction de l'angle de rotation (ϕ) dans une première plage de serrage (11), **caractérisé en ce que** le dispositif de détermination (8) est conçu pour déterminer une vitesse de modification de l'augmentation du couple en fonction de l'angle de rotation, un ensemble d'évaluation (13) pour définir une vitesse de modification maximale autorisée de l'augmentation du couple au moyen de l'augmentation du couple déterminée dans la première plage de serrage (11) et de la vitesse de modification de l'augmentation du couple déterminée dans la première plage d'augmentation (11), ainsi qu'un dispositif de commande (14) est prévu pour arrêter l'ensemble visseuse (6) lorsque la vitesse de modification maximale autorisée de l'augmentation du couple est atteinte et/ou dépassée.

5. Dispositif selon la revendication précédente, dans lequel les moyens de détermination pour déterminer le couple (M) et l'angle de rotation (ϕ) comportent un capteur de couple (9) et un capteur d'angle de rotation (10) et/ou un dispositif de mesure de puissance absorbée pour mesurer la puissance électrique absorbée d'un entraînement de visseuse et/ou un capteur de pression ainsi qu'un débitmètre volumétrique pour mesurer la pression et le débit volumétrique d'un entraînement de visseuse hydraulique.

6. Dispositif selon l'une des deux revendications précédentes, dans lequel le dispositif de détermination (8) et/ou l'ensemble d'évaluation (13) et/ou le dispositif de commande (14) sont intégrés dans l'ensemble visseuse (6) et/ou forment des composants d'un dispositif de commande électronique, qui est prévu dans l'ensemble visseuse (6).

7. Dispositif selon la revendication 4 ou 5, dans lequel le dispositif de détermination (8) et/ou l'ensemble d'évaluation (13) font partie d'un dispositif de calcul électronique externe, auquel l'ensemble visseuse (6) peut être raccordé.

8. Dispositif selon l'une des revendications 4 à 6, dans lequel le dispositif de détermination (8) et/ou l'ensemble d'évaluation (13) peuvent être raccordés à un dispositif de mémoire (15), dans lequel des tracés couple/angle de rotation de processus de serrage précédents et/ou des modifications d'augmentation et/ou vitesses de modification maximales autorisées de l'augmentation du couple dérivées de ceux-ci sont enregistrés, l'ensemble d'évaluation (13) étant configuré pour déterminer la modification et/ou la vitesse de modification maximales autorisées de l'augmentation du couple au moyen des tracés couple/angle de rotation enregistrés et/ou modifications d'augmentation et/ou vitesses de modification maximales autorisées enregistrées dans la mémoire (15).
